# EUROPEAN PATENT SPECIFICATION

(11) **EP 2 693 890 B1**
(45) Date of publication and mention of the grant of the patent: **01.11.2017**
(21) Application number: 12713728.9
(22) Date of filing: 10.04.2012
(51) Int. Cl.: A23G 3/00, A23G 3/54, A23G 3/48, A23L 19/00, A23L 7/10

(54) **FOOD PRODUCT COMPRISING DIFFERENT LAYERS**
NAHRUNGSMITTEL MIT VERSCHIEDENEN SCHICHTEN
PRODUIT ALIMENTAIRE

(30) Priority: 08.04.2011 EP 11305421; 08.04.2011 US 201161473489 P
(43) Date of publication of application: 12.02.2014
(73) Proprietor: Generale Biscuit, 92140 Clamart (FR)
(72) Inventor: RABAULT, Jean-luc, F-78730 Ponthevrars (FR); BELOUIN, François, F-91590 Cerny (FR)
(74) Representative: Boult Wade Tennant
(86) International application number: PCT/EP2012/056476
(87) International publication number: WO 2012/136854

(56) References cited:
- WO-A1-01/50869
- WO-A1-94/15484
- WO-A1-03/059084
- DE-A1- 10 015 517
- DE-U1- 29 816 806
- US-A- 4 888 187
- US-A- 4 961 943
- US-A1- 2004 202 764
- US-A1- 2006 068 062
- US-B1- 6 528 104
- US-B1- 6 616 963
- "Hagebuttenkugeln" In: Dr.Oetker: "Weihnachtsbacken von A-Z", 13 September 2010 (2010-09-13), Oetker, XP002643772, page 77, page 77
- Anonymous: "Knusper-Marzipan Pralinen", , 3 February 2000 (2000-02-03), page 1, XP002643773, Retrieved from the Internet: URL:http://www.schokoladenmuseum.de/Knuspe r-Marzipan-Pralinen_43.aspx [retrieved on 2011-06-20]
- Anonymous/ KirschHoneyBaby: "Erdbeer-Cornflakes-Pralinen", , 4 April 2011 (2011-04-04), page 1, XP002643774, Retrieved from the Internet: URL:http://www.maroczone.de/forum/archive/ index.php/t-2408.html [retrieved on 2011-06-20]
- Kräuterfee: "Sauerkirschmarzipan-Pralinen", , 21 March 2004 (2004-03-21), pages 1-2, XP002643775, Retrieved from the Internet: URL:http://www.natur-forum.de/forum/viewto pic.php?f=3&t=2201&start=0&st=0&sk=t&sd=a [retrieved on 2011-06-20]

## Description

The present disclosure relates to a bite-size food product having the external appearance of a cereal product but an internal texture contrast. In particular, the center being soft while the outer layer is crispy or crunchy. The centre is a fruit-based centre.

It is difficult to maintain a texture contrast in a snack product during shelf life (generally 1 to 18 months, preferably 2 to 12, preferably 4 to 9 ideally 6 to 9 months), especially in a non frozen product, without compromising nutrition (by adding too much fat for instance). In order for the centre of a food product, such as a fruit ingredient, to remain soft it must be moist. However, the water in the soft center tends to migrate from the center. If the centre were to be provided with a crispy layer this would then lose its crispiness: cereals become soft when too humid.

US 4 961 943 discloses coating dried fruits by applying a coating of melted fat or oil on which dry cereal particulates are dusted. The coating inhibits the migration of moisture from the fruit core to the cereal component therefore avoiding the loss of crispiness of the cereal layer. The dry coating contains particulates having a particle size of about 1/32 to 1/16 inch in length i.e. 0.79 to 1.59 mm. The fruit used can be any dried and/or candied fruits pieces having a moisture level of about 12-18%. This moisture level corresponds to an Aw of the around 0.5 to 0.65. Such whole fruit pieces could be hard to chew and would not be considered as soft.

US 4 961 943 uses fat as a water barrier, because the fat component of the coating resists the migration of moisture from the fruit, and specific cereals (shredded cereals or germs) or nuts to be more resistant to moisture. In addition, because the centre used in this document is a piece of fruit, the size and shape of the centre described in this document is also difficult to change. Furthermore, because of the coating which consists mainly of fat, the nutritional value is compromised with too much fat. Moreover, the fat layer, even if it is a good water barrier is not a good glue to stick the cereal pieces on the product. Therefore only small pieces can be used.

US 4 961 943 also indicates that it is difficult to keep the water barrier continuous if there is only one layer. That's why this document suggests the use of multiple fat layers which increases again the fat content of the product thus obtained. It has also been found that the fat layer can crack or break after production during packaging or, distribution due to mechanical shocks, thus losing its water barrier function.

CA 2 034 642 describes how to obtain a soft fruit-based product while maintaining crispiness of cereal flakes which are combined with it. A gelling agent must be added in the fruit-based product. Therefore, the product needs to be hot shaped, at a temperature of between 60 and 100°C. Such high temperature can alt er the flavor and color of a fruit-based product and in particular give a cooked taste, especially for red fruits. Therefore the product obtained does not have the natural taste and color of fruit. Furthermore this document does not indicate how to obtain a fruit-based product fully enrobed by the cereal.

FR 2 922 414 concerns a food product consisting in a cereal product containing a date filling, the cereal product keeping its crispiness. However the cereal product is not formed of individual crunchy pieces but in a continuous biscuit which is obtained by hot co-extrusion. The filling must also be fluid enough to be pumpable. Because of the necessary co-extrusion step and of the pumpability of the filling, it is therefore not possible to confer a particular form to the filling such as a 3D solid of revolution form. Moreover, because of the co-extrusion step using high temperature, red fruit could not be used instead of date since the flavor and color of this type of fruits would be altered.

US 4 256 772 describes how to prevent the migration of moisture from a soft fruit-based product to dry crisps cereals by using humectants in order to keep low Aw. However the fruits are not totally enrobed by the crispy cereal. Furthermore the fruits do not have a shapeable consistency such as that of typical modeling clay. It is, therefore, not possible to provide a particular form to the fruits, such as 3D solid of revolution form.

WO 03/059084 discloses a multilayer product. Here at least one of the layers is provided as a barrier to prevent fat migration and bloom of the chocolate coating. It does not disclose a suitable coating for use as an adhesive for a further crispy coating material.

It is also known to make superficially similar products in home baking. However, such recipes are not suitable for mass-production and do not contemplate the requirements for reproducible shaping or long term storage. Moreover, the strict fat content requirements or levels of Aw are not a concern in home baking.

The recipe titled "Hagebuttenkugeln" in Dr. Oetker: "Weihnachtsbacken von A-Z" (13 September 2010) provides a recipe for "rosehip balls", which are chocolate-coated cores of almonds, pistachios and fruit flavourings.

The recipe titled "Knusper - Marzipan Pralinen" from the website www.schokoladenmuseum.de describes a recipe for marzipan-filled chocolates coated with rice crispies.

The recipe titled "Erdbeer-Cornflakes-Pralinen" from the website http://marcozone.de/forum/archive/index.php/t-2408.html discloses a recipe for strawberry cornflakes chocolates.

The recipe "Sauerkirschmarzipan - Pralinen" from the website www.natur-forum.de describes a recipe for cherry marzipan chocolates coated with shredded coconut.

DE 298 16 806 describes fruit coated with a mixture of chocolate and coconut.

US 4,888,187 discloses a confectionary bar containing a natural fruit centre which is encapsulated in a layer of caramel. This caramel layer has an embedded layer of nuts.

There is a desire for bite-size food products in which the outside can look like a cereal product and which presents a texture contrast: the center, in particular the fruit-based center, being soft while the outer layer is crispy or crunchy. Furthermore it is desirable for the texture contrast to be maintainable during a prolonged shelf life (generally 1 to 18 months, preferably 2 to 12, preferably 4 to 9 ideally 6 to 9 months at 0 to 30°C, preferably 10 to 25°C), without compromising nutrition (by adding too much fat for instance). Moreover, in the case of a fruit-based center the taste will desirably stay as natural as possible without any "cooked taste", whatever the fruit used. Furthermore, the center should be a malleable to provide easy and convenient shaping into any desired form, such as a ball form, without the need to heat the product at a temperature above 60°C. Accordingly, the present disclosure seeks to address at least some of the problems associated with the prior art, or at least provide a commercially useful alternative thereto. Accordingly, in a first aspect the present disclosure provides a bite-size food product in accordance with claim 1.

The present inventors have found a particular process and ingredients which allow obtaining such a food product. In particular, the selection of the specific active water values and fat content of the soft centre allow for the formation of a coatable centre that can be provided with a moisture sensitive outer coating. In particular, the product can be made to appear as a biscuit product, whilst having a soft centre, without having an undesirably short shelf-life. Moreover, the product can be mass-produced on an industrial scale due to the excellent processability of the ingredient mix used to form the centre.

A bite-sized food product is a food product suitably sized to be eaten in one or two bites by an adult. Therefore, advantageously, the total length of the bite-size food product according to the present disclosure is < 12 cm (an adult bite has its longest size < 6 cm, and usually its second largest size < 4cm, preferably < 3.5 cm). Advantageously the total weight of the bite-size food product according to the present disclosure is maximum 50g (i.e. a maximum of 25g per adult bite).

In particular the bite-size product according to the present disclosure preferably has a total weight of between 0.6 and 50g, in particular 1 to 35g, advantageously of between 1 and 25g, more advantageously of between 2.5 and 15g, still more advantageously of between 3 and 10g, even still more advantageously of between 3 and 7g, and in particular of between 3 and 5g.

The food product has a plastic solid soft fruit-based centre. These terms are well known in the art. A plastic solid is a material that is capable of being shaped or formed. In contrast, an elastic solid would not retain its shaped form and nor would a fluid centre. Soft centred foods are known in the art and confectionary is often marketed as soft-centred. Soft centred foods have advantageous organo-leptic properties and allow the product to reflect the texture properties of the natural fruit.

Preferably, the centre has the consistency at room temperature similar to that of a typical modelling clay. That is, like modelling clay, it is possible to change the form of the centre by simply applying a hand-pressure, without the necessity to heat the product. Furthermore, like modelling clay, if no pressure is applied, the centre retains its shape and therefore does not flow. The centre is therefore malleable, deformable and can be hand-molded. It has the workability of modeling clay and it is not too sticky or gummy to form and handle. However, contrary to modeling clay, the centre can contain discernable fruit pieces and, therefore, need not have only a fine texture.

The bite-size product has a fat content of between 4 and 24% by weight based on the total weight of the food product. Preferably the fat content is between 5 and 18% by weight, more advantageously of between 5 and 15% by weight, still more advantageously of between 5 and 12 % by weight, even still more advantageously of between 6 and 10% by weight.

The soft centre has an Aw of between 0.28 and 0.6. The water activity (Aw) of a product is a notion which is well known in the food industry field, this quantity, abbreviated as Aw, measures the availability of water in a sample. In most cases, this water activity is not proportional to the water content of the product. The methods with which the Aw of a product may be measured are known to the one skilled in the art. It can be measured for instance with an Aqualab CX-2 or series 3, or a Novasina. All Aw indicated here are measured at 25 +/-2°C.

Preferably the soft centre has an Aw of between 0.28 and 0.55, more advantageously of between 0.3 and 0.5, still more advantageously of between 0.45 and 0.5. The Aw of the centre of the bite-size food product according to the present disclosure is very important: if the Aw is above 0.6, the centre a) is softer and more juicy, but the cereal layer c) losses rapidly its crispiness. If the Aw is lower than 0.28, the centre is generally too hard to chew or too sticky if a high amount of humectant is used. Typical corresponding water content is 4 to 17% by weight based on the total weight of the centre, usually 6 to 17%, preferably 7 to 15% by weight, more preferably 8 to 13% by weight.

The soft centre has a fat content of less than 14% by weight based on the total weight of the centre. Preferably, the centre has a fat content of less than 13% by weight, more advantageously less than 10% by weight, still more advantageously less than 6% by weight, even still more advantageously of between 3 and 6% by weight, in another advantageous embodiment less than 3% by weight.

The centre represents 40-76% by weight of the food product, advantageously 50-70%, more advantageously 58-67% by weight.

The bite-size food product according to the present disclosure present a texture contrast which is maintained during shelf life (generally 1 to 18 months, preferably 2 to 12, preferably 4 to 9, ideally 6 to 9 months at 0 to 30°C, preferably 10 to 25°C).

In a particular embodiment the bite-size food product according to the present disclosure has a sugar content of less than 50% by weight based on the total weight of the food product.

Advantageously the centre has a density > 1, advantageously > 1.1, more advantageously > 1.15, in particular around 1.2. In order to verify that the density is > 1, the easiest way is to put the centre in pure water at 20°C and verify immediately that it sink. In order to verify that the density is above 1.2, pure water can be replaced by a liquid of density 1.2 at 20°C (water / saccharose solutions, or water / glycerol solution for instance).

The centre of the bite-size food product according to the present disclosure is fruit-based (fudge-based centres are not within the scope of the invention).

By "fruit-based" it is meant that the centre "contains fruits solids". Therefore, the fruit-based centre of the bite-size food product disclosed herein does not need to contain only fruit flavour. Advantageously the fruit-based centre contains more than 5% by weight of dry fruit solids based on the total weight of the fruit-based centre, preferably more than 10% by weight of fruit dry solids, more advantageously more than 25% by weight of fruit dry solids, still more advantageously more than 37% by weight of fruit dry solids, in particular more than 50% by weight of fruit dry solids.

The term "fruit" means any "natural" fruit excluding the dry fruits commonly called "nuts" (such as walnuts, hazelnuts, almonds, peanuts, cashew nut, pecan nut). Preferably, the fruit is orchard fruit, more advantageously chosen in the group consisting of red fruit such as strawberries, raspberries, blueberries, blackcurrant, redcurrant, cranberry, elderberries or blackberries, exotic fruit such as pineapple, mango, passion fruit, pomegranate, litchi or kiwi, melon, peach, apricot, banana, cherries, apples, pears, citrus fruit such as orange, lemon, grapefruit, citrus or clementine, grapes, plums, cherry, Mirabelle, figs, raisin, tomato, carrot, red bell pepper, pumpkin, dates, and mixture thereof. More preferably the fruit is chosen from the group consisting of cranberry, apricot, apple, raspberry, strawberry, raisin, peach, fig, dates, cherries, plums, tomato and mixture thereof, more advantageously chosen from the group consisting of cranberry, apricot, apple, raspberry, strawberry, raisin, fig and mixture thereof. By extension, Rhubarb is also included in the term "fruit" according to the present disclosure, even if it is not a botanical fruit since it is usually classified and used as a fruit in cooking.

Preferably, coconut is not the main fruit of the fruit-based centre, or even not used in a significant quantity. Preferably, the fruit-based centre does not contain coconut. When only the oil of a fruit is used (like coconut oil, or palm oil), it is, of course, not counted as fruit but as fat, i.e. a "vegetable fat".

When preparing dried fruits, it is preferred that the drying is at less than 60°C. Suitable drying times are up to 30 hours, such as from 10-30 hours and preferably from 15-25 hours. Drying can be by sun drying. For red fruits the drying temperature is preferably less than 40°C.

The fruit-based centre of the bite-size food product according to the present disclosure contains minced fruit pieces. The fruit-based centre contains up to 100% by weight of minced fruit pieces, based on the total weight of the fruit-based centre, and more advantageously can contain between 10 and 70% by weight, still more advantageously between 20 and 65% by weight, even still more advantageously between 40 and 60% by weight.

The fruit-based centre of the bite-size food product according to the present disclosure can look homogeneous in texture and/or color. In another embodiment, particularly where fruit pieces can be visible, for instance because fruit pieces of another color are used, the centre may have a non-homogeneous texture and/or colour.

Advantageously the amount of fruit powders in the fruit-based centre of the bite-size food product according to the present disclosure is less than 50% by weight, based on the total weight of the fruit-based centre, more advantageously less than 35% by weight, still more advantageously less than 15% by weight, even still more advantageously less than 10% by weight, in particular less than 5% by weight. In one embodiment there may be at least 1wt% of fruit powder.

Advantageously the amount of fruit concentrates (concentrated fruit puree or concentrated fruit juices) in the fruit-based centre of the bite-size food product according to the present disclosure is less than 20% by weight of the total weight of the fruit-based centre, advantageously less than 10%, and more advantageously of between 2 and 6% by weight. Fruit paste may be obtained by grinding dried, semi-dried or infused fruits. Concentrated puree may be made from whole fruit by evaporation under vacuum heating. Concentrated juices may be made by evaporation after removal of at least part of the particles in suspension containing fibres.

Advantageously the fruit-based centre of the bite-size food product according to the present disclosure is substantially free of any sulphites or other antioxidants additives. By substantially free it is meant that there is less than 5wt%, preferably less than 1wt%, more preferably less than 0.1wt% and most preferably none.

The present inventors have discovered that the fruit-based centre of the bite-size food product according to the present disclosure should preferably not comprise a non-concentrated fruit puree or a jam. These would be either too liquid or too sticky and a jam does not have the natural taste of fruit. Moreover, a jam introduces a cooked flavour in the final product.

The fruit-based centre according to the present disclosure does not consist of a single entire piece of classical dried fruits such as raisin, apricot or plum. This is because such pieces may be too small and when the Aw of a whole fruit piece is < 0.55 to 0.6, they are too hard to chew and not juicy. This means that, surprising, they will not be recognized as natural fruit by consumers. The shape will also be irregular, small and can not be changed easily.

The fruit-based centre of the bite-size food product according to the present disclosure is not gelled by hot depositing like in "gelled fruit paste" ("pâté de fruits" in French) or by any other process. In some embodiments it may contain some gelled part, preferably less than 25wt% of the fruit centre. Advantageously it does not contain any gelled part.

Therefore the fruit-based centre of the bite-size food product according to the present disclosure has a high fruit content, with a fruit texture and taste as natural as possible.

In another embodiment, the centre of the bite-size food product according to the present disclosure is fudge-based (not within the scope of the invention). Fudge has a caramelized taste, but its texture differs from a toffee by being short and much less sticky. Its composition is a mix of sucrose (usually the main sugar), at least one reducing sugar (for instance glucose and/or fructose, or syrup containing them like glucose-fructose syrup or invert sugar; and/or lactose), and at least one source of protein, normally milk protein, generally cow milk. Optional components can comprise emulsifiers, salt & aromas, acids, bases or buffer salt to manipulate pH, humectants (sorbitol, glycerol, other polyols), fats (for instance milk fat sources, palm oil). Sugars are the main ingredient category. The reducing sugar(s) can come only from the "in process" sucrose inversion or only from the milk.

The process for preparing a fudge (not within the scope of the invention) usually comprises 2 important steps:
- the heating of the mix to reduce the final water content and create the Maillard reaction,
- then the sucrose crystallisation step during cooling, where we try to get small crystal (target 20-35µm) to avoid sandiness on tasting

Its typical water content can be from 4 to 10%, often 5 to 9%. A large part of the sucrose is crystallised.

As it is well known by the one skilled in the art, a fudge example is made by mixing sugar, butter, and milk and heating it to 116 °C, and then beating the mixture while it cools so that it acquires a smooth, creamy consistency. The sugar used is mainly saccharose to promote recrystallisation. The fudge can be flavored with caramel and/or cocoa, advantageously with caramel (not within the scope of the invention).

The centre of the bite-size food product according to the present disclosure is not toffee-based.

In a particular embodiment of the present disclosure, the fruit-based centre of the bite-size food product according to the present disclosure contains up to 28% by weight of humectant based on the total weight of the fruit-based centre. The use of humectants helps to ensure that the centre remains chewable and has a pleasant mouthfeel, even when used with a low Aw product. The centre preferably contains up to 20% by weight of humectant based on the total weight of the fruit-based centre, advantageously between 4 and 28% by weight of humectants, more advantageously between 4 and 20% by weight of humectants, still more advantageously between 4 and 16% by weight of humectants.

The humectant preferably comprises one or more polyols, advantageously chosen in the group consisting of propylene glycol, monosaccharide polyols like glycerol, erythritol, xylitol, sorbitol and mannitol, disaccharide polyols like maltitol and lactitol, and mixture thereof, more advantageously one or more monosaccharide polyols, in particular glycerol, sorbitol or mixture thereof, still more advantageously glycerol.

Where polyols are used as humectant it is advantageous that their amount is not too high. This is because of the potential laxative effects of polyols where the final bite-size food product contains 10% by weight or more of polyols based on the total weight of the food product.

In another particular embodiment of the present disclosure, the centre of the bite-size food product according to the present disclosure is not gelled. More advantageously it does not contain any gelatine. In particular it does not contain any gelatinized starch.

The fruit-based centre of the bite-size food product according to the present disclosure is not gelled. More advantageously it does not contain any gelatine or any gelatinized starch. Advantageously the centre of the bite-size food product according to the present disclosure does not contain any additives, like alginate, agar, xanthan or added pectin (which are not naturally present in the fruit-based centre), these additives being added for their gelling function.

The fruit-based centre of the bite-size food product according to the present disclosure can contain some bulking agent, such as, for example, non-gelatinized starch, maltodextrin, fibres like poly-dextrose or mixture thereof, advantageously in the amount of up to 40% by weight based on the total weight of the fruit-based centre, more advantageously between 15 and 27% by weight. In particular the fruit-based centre of the bite-size food product according to the present disclosure contains non-gelatinized starch, preferably non-gelatinized native starch.

Unlike maltodextrins, non-gelatinized native starch absorbs very little saliva in the mouth and therefore does not increase the stickiness of the centre. Furthermore, as native starch is a non-modified natural product, it is not part of food additives, which have to be reported as such on the package of the marketed product.

In addition, native starch does not have any digestive drawbacks, unlike most polyols which have a strong laxative effect. The fact that it is not cooked makes natural starch slowly digestible, which allows a reduction of the glycemic index of the food product according to the present disclosure. Thus, addition of non-gelatinized native starch in the centre of the bite-size food product according to the present disclosure causes as an additional effect a sensation of satiety which is extended relatively to products containing simple sugars.

The grain size of granules of native starches, which is generally comprised between 2 µm and 100 µm, and more generally between 5 µm and 45 µm, is also ideal for a use in the centre of the food product according to the disclosure. Thus, native starches neither comprise too many fine particles nor too many large particles, except maybe potato which has coarser granules up to 100 µm. The balance between small size and large size granules may, if needed, be adjusted according to the sought textures and properties, by mixing in different proportions, starches from various origins.

In an advantageous embodiment, the particle size (mean longest diameter) of the starch is for at least 90% of the particles, comprised between 2µm and 100 µm, preferably between 5 µm and 45 µm. Among native starches, wheat starch is preferred, because it has an ideal grain size from 2 µm to 45 µm, and because it is a natural constituent in cereal baked products, which are mainly based on wheat flour, moreover often mixed with wheat starch.

Maize and manioc starches are also part of the preferred starches because of their grain size.

Other advantages of native starch are its neutral flavor and its white color, which allows the fruit-based centre of the bite-size food product according to the present disclosure to assume the taste and the color of the fruit in case of fruit-based centre. Finally, native starch is an inexpensive ingredient. It may normally be used without any grinding in the centre according to the disclosure, which allows a simplified making process and larger productivity.

The centre of the bite-size food product according to the present disclosure can contain some added sugars, i.e. in the case of fruit-based centre, sugars which are not initially present in the fruit material. By "sugar or sugars", is intended to mean in the sense of the present disclosure the dry matter of any mono- and disaccharides, whatever the source and also by extension all the dry matter of the glucose syrup, also called glucose-fructose syrup or fructose-glucose syrup. Among monosaccharides mention may be made of fructose, galactose, glucose, mannose and mixture thereof. Among disaccharides, mention may notably be made of saccharose, but saccharose may be partly or totally replaced with another disaccharide such as lactose or maltose. Glucose syrup contains mono and disaccharides, but also some longer chains of polymerized dextrose. Advantageously in the case of fruit based centre added sugars are mainly monosaccharides. Advantageously the amount of added sugar in the fruit-based centre is up to 50% by weight based on the total weight of the centre, more advantageously up to 33% by weight, still more advantageously up to 25% by weight, even still more advantageously up to 15% by weight on the dry matter basis.

The centre of the bite-size food product according to the present disclosure can contain one or more food acid, in particular citric or malic acid or mixture thereof, advantageously in an amount of up to 5% by weight based on the total weight of the centre, more advantageously of between 0.3 and 1 % by weight. The acid can enhance the flavour of the centre, in particular in the case of a fruit-based centre. Other flavouring agents, colouring agent, seasoning agent and salt can be added with a total amount for all these ingredients of up to 5% by weight based on the total weight of the centre for sweet products, and up to 10% for savoury products, that can contain higher amounts of spices & herbs for instance.

In an advantageous embodiment of the present disclosure, no colorant additives, preservatives additives and artificial aroma is present in the centre of the bite-size food product.

The centre of the bite-size food product according to the present disclosure can also contain some crispy pieces. By crispy it is meant a piece or fragment that gives a crunchy or brittle texture when eaten. Preferred crispy pieces include cereal inclusions. These crispy pieces are not taking into account for calculating the fat content and/or the fruit solid content of the centre, but are taking into account for the calculation of the centre weight relative to the other layers.

The fruit-based centre of the bite-size food product according to the present disclosure is cold formed at a temperature of 20±10°C. Preferably the fruit components used in the centre are at no point subjected to temperatures in excess of 60°C. This prevents the development of cooked flavours in the fruit.

"Cold forming" refers to the shaping of the ingredients to give a particular shape to the fruit-based centre at a temperature of below 60°C. The inventors have found that below this temperature, the natural pectin present in a fruit-based centre is not functionalized. Therefore the product does not set in the final shape of the product. Therefore there is no jellification during the forming of the fruit-based centre of the bite-size food product according to the present disclosure. It is possible to cold-formed the centre because it has a modelling clay like consistency.

Due to the fact that the centre of the bite-size food product according to the present disclosure can be cold formed, it can have any shape possible. Preferably it has a regular shape. In particular it can have the form of a bar, a star, or of a 3D solid of revolution. Advantageously it can have a 3D solid of revolution form.

In the sense of the present disclosure, the term "3D solid of revolution" is intended to mean a solid figure, i.e. the volume, obtained by rotating a plane curve around some straight line (the axis) that lies on the same plane. For example it can have the form of a cylinder, of a cone, of an egg or of a ball. Advantageously the centre of the bite-size food product according to the present disclosure has a spheroid shape, preferably a ball form, which is often not a perfect one.

In a particular embodiment of the present disclosure in which the centre of the bite-size food product according to the present disclosure has a ball form, the centre will have a diameter of between 13 and 24 mm.

The centre of the bite-size food product according to the present disclosure imparts the desired softness texture to the bite-size food product.

The centre of the bite-size food product according to the present disclosure is fully enrobed by a layer b) of a chocolate or chocolate-like composition.

The definition of chocolate is regulated, depending on the country of sale, in particular by the 2000/36/EC Community Directive. In the sense of the present disclosure, by "chocolate" is meant any such concentrated suspension of solid particles in a continuous fatty phase, which is not a water-in-oil emulsion, and which fat is solid at 20 to 25°C. Traces of water content, up to 3% in weight of the chocolate, like in tropicalised chocolate, are not considered as water in oil emulsion. Chocolate is solid or semi-solid at shelf life temperature, and usually liquid at 45°C. Preferenti ally the chocolate contains as fat exclusively cocoa butter and/or AMF (Anhydrous Milk Fat) and/or hazelnut oil and/or almond oil and/or emulsifiers. However it may further contain as a mixture with cocoa butter, other fats authorized in the 2000/36/EC Community Directive. The chocolates may have a very crispy texture at 20°C (for example if they only contain cocoa butter) or a rather soft texture (for example if they contain a larger proportion of AMF or especially hazelnut oil).

In the sense of the present disclosure, by "chocolate-analog" is meant any concentrated suspension answering the above general chocolate definition, but which does not meet the legal definition of chocolate. The chocolate-analog composition may indeed contain ingredients which, according to the 2000/36/EC Community Directive, are not authorized in a chocolate, such as for example starch or certain vegetable fats. This may for example be a hydrogenated optionally fractionated lauric fatty material. The analog may also contain ingredients authorized in chocolate, but at doses which are not accepted for chocolate (for example more than 5% of vegetable fats other than cocoa butter). These analogs of chocolate are generally called in French "pâté à glacer" and in English "chocolate compound or "compound". This gives it a texture close to chocolates, but sometime a bit softer.

The chocolate or chocolate-like composition can be sweet (in that case, the main powder is usually sugars, preferably sucrose), or savoury (may contain vegetables powders, cereals, spices and herbs). Unless specified, the word chocolate in the rest of this disclosure means either chocolate as legally defined, or a chocolate-analog (chocolate-like), eventually of a softer texture than real chocolate. Advantageously the coating is a chocolate coating.

Advantageously, the fat content of the chocolate or chocolate-like composition layer of the bite-size food product according to the present disclosure is less than 38% by weight based on the total weight of the chocolate or chocolate-like composition layer, more advantageously less than 33% by weight, still more advantageously less than 30% by weight, but more than 21%, preferably more than 25%.

The chocolate or chocolate-like composition layer b) of the bite-size food product according to the present disclosure acts as a glue in order to stick the crispy pieces as described above, on the center of the bite-size food product according to the present disclosure. It is not possible to maintain firmly the layer of individual crispy pieces directly on the centre. The chocolate or chocolate-like composition also acts globally a bit as a water barrier. However the water barrier effect is very limited, because some big pieces of crispy pieces are in direct contact with the fruit center (or isolated with a very thin chocolate layer): so the Aw of the centre can not be over 0.6 without loosing the clear crispiness of the crispy pieces.

However, the chocolate or chocolate-like composition layer b) increases the fat content of the bite-size food product according to the present disclosure. Therefore the amount of the chocolate -like composition in the bite-size food product of the present disclosure should be carefully chosen. Advantageously, the chocolate or chocolate-like layer b) represents 14-45% by weight of the total weight content of the food product, more advantageously 14-30% by weight, still more advantageously 15-25% by weight, even still more advantageously 16-21 % by weight.

In order to stick the pieces strongly on the centre, the fat of the chocolate or chocolate-like composition of the bite-size food product according to the present disclosure must be hard enough. As a consequence the amount of the saturated fatty acids (Safa) plus trans fatty acid if any, of the chocolate or chocolate-like composition must be >25% by weight based on the total weight of the fatty acids in the chocolate or chocolate-like composition, much preferably more than 38%, even more preferably over 45%, and preferably > 52% by weight, more preferably > 60% by weight, still more preferably also less than 70% by weight.

Advantageously the chocolate or chocolate-like composition of the bite-size food product according to the present disclosure does not contain any trans fatty acid, except those naturally coming from fats, especially from the milk fat. Highly suitable fat which can be used in the chocolate like composition of the bite-size food product according to the present disclosure are for instance cocoa butter, or hydrogenated and/or fractionated lauric fats, more advantageously cocoa butter.

In a particular embodiment, the chocolate or chocolate-like layer b) of the bite-size food product according to the present disclosure is invisible or almost invisible on the outside of the bite-size food product according to the present disclosure. In this case, the coating thickness, as measured in the final product after the cereals are stuck, must be adjusted to the crispy pieces thickness of the layer c). Advantageously the chocolate or chocolate-like composition layer b) thickness is less than 80% of the size of the biggest crispy pieces of the layer c), more advantageously less than 60%, still more advantageously less than 50%. Advantageously the thickness of the chocolate or chocolate-like layer b) in the bite-size food product is between 20 and 55% of the thickness of the biggest crispy pieces of the layer c).

Preferably the thickness of the chocolate or chocolate-like layer is from 0.1 to 5mm, more preferably from 0.5 to 1.5mm and most preferably about 1 mm. This provides sufficient chocolate coating to provide an adhesive effect while not overpowering the taste of the centre.

In an advantageous embodiment the chocolate or chocolate-like composition of the bite-size food product according to the present disclosure does not look like chocolate for the consumer. For example in case of a fruit-based centre, white chocolate or chocolate analog containing colouring agent and/or flavouring agent and/or fruit powders as described in WO2008/059022 is used in order for the layer b) to have a colour and a taste closed to the colour and taste of the fruit-based centre.

Another example would be the use of white chocolate or chocolate analog containing grinded baked dry cereal in order for the layer b) of the bite-size food product according to the present disclosure to have a colour and a taste closed to the colour and taste of the layer c).

In the bite-size product according to the present disclosure, the chocolate or chocolate-like composition layer b) is fully covered by a layer c) of individual crispy pieces, advantageously mainly cereal pieces. The layer c) of crispy pieces is partially embedded inside the chocolate or chocolate-like composition layer b). Some crispy pieces can even touch the centre of the bite-size food product, since during the process for preparing the bite-size food product, the individual crispy pieces are added to the melted chocolate or chocolate-like composition coating and can sink into the liquid chocolate or chocolate-like composition under their own weight or more probably under the mechanical mixing.

In the sense of the present disclosure, the term "coating", "covering" or "fully covered" includes not only the bite-size food product in which the chocolate or chocolate-like composition is totally covered by the layer c) but also the bite-size food product in which the chocolate or chocolate-like composition is almost totally covered by the layer c), to take into account artifacts or zones difficult to coat. By fully covered it is meant substantially encapsulated. However, it does not include products in which only the bottom and/or the top are covered by the layer c) and therefore in which the sides are not covered.

The layer of individual crispy pieces c) of the bite-size food product according to the present disclosure is made from several individual crispy pieces which are glued on the centre of the bite-size food product according to the present disclosure by the chocolate - like composition layer b). The crispy pieces of the layer c) of the bite-size food product according to the present disclosure are advantageously cereals based (for example: rice crispies, pieces of corn or wheat flakes, biscuit or rusk crumbs). More advantageously the cereals are not shredded cereals, because these are hard and of poor appeal for consumers. Still more advantageously the cereals are made from baked dough (flakes, extrusion cooking for example).

Beside cereals, all or some of the crispy pieces of the layer c) of the bite-size food product according to the present disclosure could also be grains (sesame, flax for example), nut pieces (hazelnuts, almonds, peanut, walnut, pistachio, cashew for example), crunchy caramel pieces, caramelized nuts, chocolate pieces (vermicelli, drops for example), fruit crisps (pure like freeze dried or on a support like sugar or maltodextrine) alone or mixed. When mixed, the appearance can be multicolor.

Advantageously the crispy pieces of the layer c) of the bite-size food product according to the present disclosure are cereal based or are a mix including cereals, more advantageously cereal based.

The layer c) of the bite-size food product according to the present disclosure brings the crunchiness and decorates the bite-size product according to the present disclosure and, at least in the case of cereals, may also improve nutrition and decrease cost. Furthermore both layer b) and c) avoids the centre stickiness in hand.

In a particular embodiment of the present disclosure, the crispy pieces layer c) of the bite-size food product according to the present disclosure represents 10 to 30% by weight of the total weight content of the food product, advantageously 15 to 23% by weight.

In particular the size of the crispy pieces is comprised between 0.6 and 8 mm, advantageously between 1 and 5 mm, still more advantageously between 1.6 and 3.15 mm. The size is measured with square sieves. In another particular embodiment of the present disclosure, at least 30% (preferably at least 50%) of the pieces of the crispy layer c) of the bite-size food product according to the present disclosure have a size greater than 1.6 mm, advantageously greater than 2 mm. Preferably no more than 90% of the particles, more preferably no more than 70%, are this size, since this makes it harder to achieve a complete covering. If the size dispersion is big, as the chocolate or chocolate-like composition layer b) thickness must be calibrated to stick the biggest pieces of the crispy layer c), the smallest pieces will be encapsulated in the chocolate or chocolate-like composition, and not visible outside. This will increase the cereal content of the bite-size product according to the present disclosure.

Preferably the crispy pieces are no more than 10mm in size and preferably no more than 5mm in size (mean longest diameter).

In a particular embodiment of the present disclosure, the crispy pieces of the crispy pieces layer c) of the bite-size food product according to the present disclosure are visible and clean from the outside. In this case, the pieces of the crispy layer are not recovered or get dirty by the chocolate or chocolate-like composition, and chocolate or chocolate-like composition b) may be invisible for the consumer, especially if the color contrast is not too high between the chocolate or chocolate-like composition and the crispy pieces. For example, a cereal product aspect can be obtained, in the case of cereal-based crispy pieces.

In a particular embodiment of the present disclosure in which the centre has a ball form, for a final bite-size product of 7 g, typical centre diameter is 18 mm, and total diameter of the bite-size food product is 25 +/- 3 mm (with inclusions up to 3.15 mm, 60% by weight of centre, 20% by weight of chocolate or chocolate-like composition layer b) and 20% by weight of cereals layer c)).

In another particular embodiment of the present disclosure, the crispy pieces layer c) is fully or partially coated by another chocolate or chocolate-like composition layer d). In this case, the crispy pieces layer c) can be almost invisible form the outside of the product.
This layer d) can be very thin to see the crispy pieces relief, or thick to hide the crispy pieces.

In a second aspect, the present disclosure provides a process of preparation of a bite-size food product as described herein, the process being in accordance with claim 10.

Advantageously, the mincing of the ingredient, especially for the preparation of a fruit-based centre, in step 1) is carried out with a meat grinder (a machine suitable for grinding meat) or equivalent cutting device, in particular a meat grinder. When working on an industrial scale it will be appreciated that a machine equivalent to a meat grinder will be used. A meat grinder is well known by the one skilled in the art. The ingredients are put into a funnel, which is placed on the top of the grinder. From there the material goes on a horizontal screw conveyor. This screw conveyor, which can be powered by a hand wheel or an electric motor, squashes and partially mixes the ingredients. At the end of the screw conveyor there is a knife installed directly in front of the fixed plate with holes. At this opening the minced ingredients comes out of the machine. The fineness of the minced ingredients depends on the size of the holes of the plate, the flow rate and the number of knives cutting revolution per minute.

In an advantageous embodiment of the process according to the present disclosure, step 1) contains 2 sub-steps which are carried out separately:
- firstly step 1a) which consists in the mixing and mincing of the ingredients,
- then step 1b) which consists in cold forming the product obtained in step 1a).
These forming steps are conducted at a temperature below 60°C. In order to obtain the fruit-based centre with the right consistency (in particular the consistency of modelling clay) step 1a) is particularly needed. Furthermore the type of ingredients used, the mixing and mincing are particularly important.

In order to obtain a centre, in particular a fruit-based centre, with the right consistency (in particular the consistency of modeling clay) step 1a) is particularly needed. Furthermore the type of ingredients used, the mixing and mincing are particularly important.

In the case of Fudge (not within the scope of the invention), this right consistency can be obtained by starting with well crystallized Fudge, which is mixed and minced with a meat grinder. In the case of a hard Fudge, a slight temperature increase is beneficial to melt the fat, but it is better to be below 60°C, preferably below 50°C, more preferably below 40°C, and even more preferably below 35°C to not melt too much sucrose crystals, that will later recrystallize and can give bigger crystals, which makes a grained texture.

In the case of a fruit-based centre, this right consistency is usually obtained by combining:
- fruit pieces at least partly minced / kneaded
- a liquid phase (containing if necessary at least one humectant like glycerol or other liquid polyol or polyol solution, and/or fruit concentrates and/or water) to increase juiciness
- and possibly some powders (fruit powders, non gelatinized starch for example) to control stickiness, and/or decrease sugars and/or cost (non gelatinized starch) or other purposes (increase fruit content for example).

By the term "fruit pieces", it is intended to mean the pieces, whatever have been infused / added in it (sugars, sugar replacers / bulking agents, humectants like glycerin).

Typical compositions are indicated in table 1 below (in weight based on the total weight of the fruit-based centre):

| **Ingredients** | **Broad range %** | **Preferred range %** |
|---|---|---|
| Dried fruits pieces minced or grinded in dough, which usually contain the main part of fruit solids | 0-100 | 10-70 |
| | | advantageously 20-65 in particular 40-60 |
| Humectants | 0-28, | 4-16 |
| Other liquids: water, juice concentrates | 0-25 | depends on Aw target |
| Added sugars dry matter | 0-50 | 0-33 |
| | | advantageously 0-25 |
| Fruit powders | 0-50 | 0-35 |
| | | advantageously 0-10 |
| Bulking agents | 0-40 | 15-27 |
| Flavor, colors, seasoning, salt (added) | 0-10 | 0-5 |
| Acids added | 0-5 | 0.3-1 |
| Fat (including emulsifiers) | 0-14% | 0-10 |
| | | advantageously 0-5% |
| Aw | 0.28-0.60 | 0.30-0.50 |

In case of liquid sugars, the water part is counted in other liquids.

Advantageously, the main part of the fruit solids of the fruit-based centre comes from dried fruits, also called semi-dried fruits (either sun dried or oven dried), or from dried and sugar infused fruits (Cranberries, cherries, pineapple for example), depending on the fruit market. Typical water content is from 8 to 16% (for sugar infused) and up to 26% (apple sun dried), and Aw 0.55 to - more common- 0.65 or 0.70 (and even more in presence of sulphites, which is an antioxidant having some antimicrobial effect), which is too high to use in combination with crunchy ingredients.

Semi-dried fruits used are preferred in pieces rather than in paste, to decrease stickiness during process, get a more modeling texture and to have a more natural aspect and texture.

The best suitable semi-dried fruits are sun dried raisin (dark or golden), apricot, apple, figs. Other suitable semi-dried fruits are peach, pear, plum, dates, banana and mango. Among dried and sugar infused fruit, the cranberries, as sold in "raisin-like" form are preferred. Preferred fruits regarding texture are cranberry, raisin (golden or black), apricot, which can all be used alone or in mixes. Apples are often more dry, less cohesive and are better to be used in blend with the previous fruits. Cranberries are very useful as their bitterness and astringency hide any too sweet taste and their color is beautiful.

Tomato, red bell pepper and pumpkin can also be used.
However, other fruit sources (fruit paste made from grinding of dried or semi-dried fruits, concentrated fruit purée made from whole fruit by evaporation under vacuum heating, concentrated juices usually made after removal of at least part of the particles in suspension containing fibers, or fruit powders) could be used, preferably as a complement to dried or infused fruits, but also as the main fruit source.

Citrus like are less suitable as main fruit solid source, because of their low solid / fiber content and their high acidity. They will be rather used in concentrated juice and / or puree form, as a complement.

Possible fruit powders are apple, strawberry, and raspberry. They can be obtained by several methods, for instance oven dried and milling or freeze dried and milling, or spray dried juice. Fruit powder will preferably count <15% by weight of the centre weight, preferably < 10% by weight and more preferably < 5% by weight.

Possible fruit concentrates are raspberry, strawberry, blueberry, blackberry, blackcurrant, orange, pineapple and citrus. Fruit concentrates will preferably count <10% by weight of the centre weight, preferably 2 to 6% by weight.

No added gelling or setting hydrocolloid (pectin, starch, gums, alginates for example) is necessary to make the texture and the forming. The advantage of this is that the fruit seems more natural and the process is simpler.

The weight % of humectants and sugars will be adjusted to match the Aw target.
Sugars can be added in powder, or in syrup (containing usually ∼18% by weight of water). Food acid (preferably citric or malic acid) can be added (typically 0.3 to 1 %by weight based on the total weight of the fruit-based centre) to enhance the flavor.

Fruit juices (preferably in a concentrated form) can be used either for taste or coloring (red or dark elderberries, or all the berries or currants: blackcurrant, redcurrant for example).

The mincing of the fruits pieces used in the fruit-based center can be made:
a) before the mixing with other ingredients to make the fruit preparation.
b) during the mixing with other ingredients ("all in" process, using an extruder for instance)
c) after the mixing: the ingredients are first mixed, then the mixture is minced together in a meat grinder

Step a) can be done by the fruit supplier, but preferably in the final factory.

The mixing and mincing of the ingredients can therefore be carried out at the same time or successively. Advantageously the mincing, in particular with a meat grinder, of step 1) is carried out before and after the mixing.

In a particular embodiment, a first cutting can be made by the fruit supplier: it consist to reduce the size of the whole fruit (which can be big: apricot, apple for example) in pieces of mean size below the diameter of the fruit-based centre, and preferably below half of this size. Then the fruits pieces obtained are mixed with other ingredients, and the second mincing enable to finish the size reduction, while releasing some sugars to improve the internal cohesion of the centre during following forming.

The mincing step reduces the fruit pieces to fit the final center size. More importantly, it also gives a less hard / chewy / leathery texture to the mixture obtained and therefore the consistency of modeling clay. It also helps to have a good balance between the internal cohesion (necessary for the forming and solidity after forming) and external stickiness, which may disturb the forming.

Mincing may be an important step: if the fruit pieces are bought already chopped with the right granulometry directly from the supplier, it may not be possible to just form them (without further mincing), as the product obtained will not be cohesive enough. This is due to the fact that the supplier usually adds a small % of anti-caking agents (oil, starch, sugars for example). Mincing exudes some sticky liquid sugars and disperses the anti-caking agents, which enables the internal cohesion. However, if the mincing is too much, external stickiness can occurs and give problems for the later forming.

Any conventional mixer can be used for mixing the ingredients, for instance planetary, or with 1 or preferably 2 horizontal shafts like Z-Arm mixer.

Advantageously, it is simpler to start from partly hot infused dried fruits at an Aw below 0.6. An example is cranberries, which can not be found without added sugars in such food form. Commercial dried cranberries are infused by at least sugars, and often also with glycerol (to make them softer) and eventually other soluble components, and can have an Aw for instance from 0.45 to 0.53.

They can be processed with a single meat grinder which kneads, minces and extrudes a cylinder, like for making sausages.

To have a softer texture, it is possible to pass the product 2 times in the grinder: first time without the "sausage" extruding exit, to just mince / knead the fruits, and the second time with the sausage extruding exit to further mince and form the cylinder at the same time.

Therefore in a particular embodiment of the process according to the present disclosure, the mincing of the ingredients and in particular of the fruit part in case of a fruit-based center of step 1a) is carried out at least once, and advantageously at least twice.
The second sub-step 1b) necessary for preparing the centre of the bite-size product according to the present disclosure consists in cold forming the product obtained in step 1a) at a temperature of 20 ± 10°C.

The preferred shape is a solid of revolution, preferably a ball (= quite round product). This ball shape can be obtained from a "boilies table": this is a forming device well known to make round carp fishing baits called "boilies", made of a dough containing a cereal flour and eggs ; the obtained balls are then cooked by frying, and then dried. Such a table, called "TABLE DES FRERES MAHIN" is available from Starbaits company (http://www.starbaits.com/fr/article/table-des-freres-mahin.50.html). This table converts a cylinder into balls of the same diameter than the cylinder. Other shaping machines include the rolling machines made by Krüger and SaleckerTM, such as the ARM 0250+600. This is able to extrude a cylinder of fruit centre material and divide it into balls using a line of cutters with a crescent profile.

The first step is to extrude a cylinder (or much less preferred other forms like parallelepiped) from the grinded mixture obtained in step 1a), cutting it to the length suitable for the "boilies table". The second step is to place one or several cylinder on the table, and convert it into balls by an alternative translating movement of the upper side of the table, the lower side being fixed. The diameter of the boilies table channels makes the diameter of the final balls. The diameter of the extrusion cylinder must be close to the one of the boilies table, to make balling more efficient.

To change the diameter, it is necessary to change the diameter of the hemi cylinder channels of both top and bottom part of the boilies table, as well as the diameter of the extruded cylinder. Various boilies table sizes exist, enabling ball sizes between at least from 8 to 32 mm, by step of 2 mm.

More generally for a solid of revolution: the grinded mixture obtained in step 1a) is first divided in pre-forms which are sent one by one in between 2 parallel surfaces, defining a close section which has the wanted shape (a disc for a final ball shape). The surfaces are quite parallel to make a channel (a hole cylinder for a ball shape). The 2 surfaces have a differential speed (usually, 1 surface is fixed and the other moving), making the dough pre-form roll in between these 2 surfaces: this produces the solid of revolution. The pre-form size must be adapted to the volume defined by the 2 surfaces. Usually, several channels are in parallel, in order to make several forms at the same time.

Alternatively, more conventional shapes can be made (bars), for instance by rotary molding.

In a particular advantageous embodiment, steps 1a) and 1b) are carried out between 0 and 50°C. Usually, step 1a) is made at a final temperat ure of 10-50°C, preferably 20-35°C, and step 1b) at 0-50°C, preferably 0 to 40°C, advantage ously 4 to 35°C and more preferably 20 +/-10°C.

Therefore the taste of a fruit-based centre obtained using this process is good because fruits are not heated at high temperature during the fruit centre preparation of step 1). So it does not take any "cooked" fruit taste, like in jams or "pâtés de fruits". Furthermore, its color is preserved.

Softness of the fruit-based centre can come from the humectants (glycerol / sugars) and the water, but also from the fruit pieces mincing. In case no glycerol / high fruit content is used, pieces must be cut in smaller pieces to be softer / less chewy, and Aw is better to be selected in the upper ranger (0.54 for instance).

Stickiness is critical for the forming process step 1b). Optimum stickiness depends on the forming process and material. Stickiness must be adapted (not too low, but not too high) for the balling (or other forming) by:
- careful choice of the ingredients: more water, glycerol and liquid sugars make the product stickier. Powders, including fruit powder, especially apple powder, as well as fat, decrease stickiness. The stickiness is also probably driven by the microstructure (having the glycerol outside the pieces, in the free phase, make it stickier than when infused in fruit pieces).
- the process used and in particular:
   - in step 1a : preparation of the centre:
      a resting time, a colder temperature (well known for its impact on glass transition Tg) and less mincing / kneading make the product less sticky. Mincing / kneading increase fruit cells breakage in fruit-based centre, which release sugars and increase the surface stickiness;
   - The Ratio surface / volume of the center: bigger pieces are easier to make
   - The Contact material: tension surface, surface smoothness or presence of grooves for example
   - The spraying of a liquid on the forming surface (water / oil for example) decrease stickiness
   - The ambient air RH: it is preferably < 60% RH, and more preferably 40 to 55% to reduce stickiness
   - When fat is added in the centre recipe, it is better to add it at the end of the mixing.

In the case of the centre having a ball form, the centre has the right stickiness when balls can be formed easily and with constant ball weight. In case a plastic boilies table is used for the forming step, the product is:
- Not enough sticky when it slips and cannot form balls (this is for instance the case if some oil is sprayed on the table)
- Too sticky when pieces are spread, with some product build up on the table.

Advantageously, after step 1a) there is a resting time before performing step 1b), at either room or refrigerated temperature. More advantageously the resting time is from 4H to 6 months, still more advantageously from 4 to 72H, and even still more advantageously from 8 to 24H.

In case fat is added during step 1), it is advantageously non hydrogenated fat, for instance palm oil. In a preferred embodiment, this is a hard fat, containing more than 35% Safa, preferably more than 42%, and more preferably from 45 to 55%.

In another embodiment of the fruit-based centre preparation step 1):
- 2 quite concentric fruit preparation are used in the centre. They can be made by co-extrusion of a fruit preparation cylinder, then balling.
- Multi-color fruit preparation is used, for instance 2 colors making approximately 50% each of the surface of the fruit based centre.

Advantageously, because the centre is sticky and difficult to handle, in the process according to the present disclosure, there is no bulk storage of the formed centre obtained in step 1) before carrying out step 2). Bulk storage will lead the centres to stick together, making centre deformation or making further use more difficult.

Step 2) of the process according to the present disclosure consists in enrobing the centre obtained in step 1) with a melted chocolate or chocolate-like composition in order to form the layer b). By melted it is meant that the chocolate or chocolate-like composition is not in its final set and solid state. It does not infer a need for an active melting step, for example, where the composition is freshly made from the raw component ingredients.

The viscosity of the melted chocolate or chocolate-like composition can be adapted to the required coating thickness, as known by the chocolate maker.

The chocolate or chocolate-like composition is either tempered or not. In an advantageous embodiment the real chocolate is tempered, and the chocolate-analog is pre-crystallized, even when it is not needed for decreasing the bloom risk since the chocolate is covered by the crispy pieces layer. In fact, this will ensure quicker crystallization of the chocolate / chocolate-analog coating and therefore a shorter step 4).

In an advantageous embodiment, step 2) is carried out with a conventional enrober (preferred version) or any other suitable process known by the chocolate maker (dipping for example).

Advantageously only one coating step is carried out in step 2) (less fat % in the final bite-size food product according to the present disclosure), but it is also possible to carry out 2 coatings steps for more chocolate or chocolate-like composition in the final bite-size food product according to the present disclosure. In this case, a cooling step is required in between the 2 coatings steps.

In an advantageous embodiment, the crispy pieces of the layer c) are well visible outside the bite-size food product according to the present disclosure, i.e. not covered by the chocolate or chocolate-like composition. In this case, the coating thickness of step 2) must be adjusted to the crispy pieces size.

Advantageously due to the stickiness of the centre, it is important that at the entrance of the enrober, the centres are separated from each other, to enable a full enrobing with the chocolate or chocolate-like composition (and then with cereals) and avoid "doubles or multiples" final products. This separation can be done by hand if necessary.

Step 3) of the process according to the present disclosure consists in applying a coat of individual crispy pieces on the product obtained in step 2) before the complete setting of the chocolate or chocolate-like composition layer in order to form the layer c).

Several equipments can be used for carrying out step 3):
- conventional rotating pan or Finn Coater (batch) : the crispy pieces are in rotation in the pan and the different centres covered with the chocolate or chocolate-like composition are added separately so that they fall directly on the crispy pieces bed and not on other centre already inside. The rotation speed must be low enough to not take the chocolate or chocolate-like composition out of the centres, but quick enough to enable to add new centres covered with the chocolate or chocolate-like composition quickly enough. When too many centres are inside the pan, they may damage each other. It is necessary to take them out, for instance with a net, which let the loose crispy pieces falling back inside the pan, and then send the centres coated with the crispy pieces to the cooling of step 4). Such batch equipments are sold for instance by Dumoulin (Z.I. Le Closeau, 5 rue Auguste Perdonnet, 77220 TOURNAN-EN-BRIE, FRANCE).
- continuous horizontal rotating pan (higher throughput): this is the preferred embodiment. It uses the same principle as the conventional pan for the rotation, but the centres coated with chocolate or chocolate-like composition enter on the upper side and the final product exit the lower side (the pan has a slight slope). The crispy pieces also enter / exit in the same way, a bit upstream of the coated centre, and make a bed, where the centres coated with chocolate or chocolate-like composition fall. The height of crispy pieces bed is controlled by the rim / flange and or the crispy pieces in feed flow rate. This height must be enough in order the centres do not transfer their melted chocolate or chocolate-like composition to the walls (which would make the crispy pieces stick to the wall, instead of only on the centre). The slope and rotation speed can be changed: this enable to spread the centres on all the available surface, and control the process time. A typical coating time is between 2 and 20 seconds, preferably in the area of 2 to 10 and 3 to 6 seconds.
- On a belt: in this case it is necessary to feed the belt with a bed of crispy pieces, with a thickness enough to avoid the centre covered with chocolate or chocolate-like composition to touch the belt. If the chocolate or chocolate-like composition touches the belt, then the belt becomes dirty and some crispy pieces may be stuck together or to the belt, instead of only sticking on the fruit centre. Furthermore, the centre will not be fully coated by the crispy pieces. After feeding the belt, the centre covered by the chocolate or chocolate-like composition fall from the enrober net (or eventually from the detailer if any) directly on the crispy pieces bed. Then another layer of crispy pieces is added. The whole is moved to rotate the products (for instance, by deflectors, falling on another belt), in order that all the surface of the product is coated with crispy pieces.

Preferably the centres coated by the chocolate or chocolate-like composition fall directly from the enrober on a crispy pieces bed and not on a "naked" belt, or on the pan walls or on other centres. This is important to better coat all the centre surface by the crispy pieces and get pieces well stuck to the centre after the chocolate or chocolate-like composition cooling. This also enables a clean and productive process: no build up of chocolate or chocolate-like composition and crispy pieces on the pan walls or on the belt, and easy recycling of the loose crispy pieces (clean pieces, not dirtied by the chocolate or chocolate-like composition).

For a center in ball shape, all these equipments are suitable, but the preferred version is the continuous horizontal rotating pan. For a center in cylinder shape, the Finn Coater may be suitable. For irregular shapes that do not rotate regularly, the coating on a belt may be more adapted.

In an advantageous embodiment of the process according to the present disclosure, the loose crispy pieces obtained after step 3) are separated from the bite-size product after or before the cooling step 4), advantageously before the cooling step 4). Therefore, after coating with crispy pieces, the excess of crispy pieces (free or loose) is removed by conventional sieving (pieces go through the sieve, when final products stay on it). Sieving can be done by batch, or preferably continuously (sieve or grid in slope to make the coated centres transfer to the cooling belt (step 4) at the same time; or rotating sieve for example). Sieving usually means intense shaking, but it is better to have a gentle sieving, because the chocolate or chocolate-like composition is not fully set yet.

In another advantageous embodiment of the process according to the present disclosure, in order to carry out step 3) the centre coated by the melted chocolate-like composition obtained after step 2) fall directly from the enrober wire mesh on a crispy pieces bed, the crispy pieces being in movement to enable a full coating.

The free crispy pieces are preferably recycled back to the pan / belt coating.

Step 4) of the process according to the present disclosure consists in cooling the food product obtained in step 3) to set the chocolate or chocolate-like composition layer b). Cooling is standard as in chocolate / confectionery process. It can be done at ambient temperature or preferably in a cooling device, preferably in a continuous cooling tunnel. Cooling time is usually between 1 and 30 minutes, preferably 1 to 10 minutes, preferably 2 to 7 minutes, depending in particular on centre temperature, type of fat used, product diameter, cooling efficiency. It can be done on a belt perforated or preferably not perforated.

In a less preferred embodiment the centres coated by the crispy pieces are let to cool directly in the crispy pieces batch coating pan, which can be supplied with cold air. The free crispy pieces may be separated after the chocolate or chocolate-like composition solidification. This is a less productive method.

The process according to the present disclosure can comprises a further step 5) of packaging the bite-size food product obtained in step 4). Advantageously it is packed hermetically in a conventional way. Advantageously it is packed air tight, to maintain crispiness. Preferably transparent packs are used to see the product. To protect the product during logistics (decrease the risk of crispy pieces being taken off the centre), individual wrapping of pieces, or flow pack of a few pieces, or boxes with trays can be used.

The inventors have found that the preferred food product has a regular form, in particular, a 3D solid of revolution form and most preferably spherical (ball form). This regular shaping allows for the improved secure attachment of the crispy pieces, especially larger pieces. The preferred crispy pieces have a diameter (mean longest diameter) of at least 1.6mm and preferably at least 2mm. The use of a regular shape facilitates the attachment of these pieces and this allows for a more complete covering of the centre. Moreover, the use of a humectant allows for the provision of a soft centre while maintaining a low Aw. In this way the crispiness of the crispy pieces is maintained for a long shelf life. The humectant does not spoil the taste of the product but makes the ball shaping easier. The humectant is preferably in an amount of 4-16 wt% of the centre.

Preferably the centre is a fruit centre and is prepared with heating the ingredients for the centre above 60C at any point. In this way the fresh, non-cooked flavor of the fruit is maintained. Thus, a nutritionally beneficial snack can be mass produced with a long shelf life and which, importantly, tastes and appears to be healthy. Moreover, it is also advantageous to include non-gelatinised starch as discussed above due to the slower energy release that can be achieved in the final nutritional product.

It is desirable for the fruit centre to be minced because this provides a softer texture and a meat-grinder is ideal for providing such a texture. Especially in combination with humectants, this permits the use of a low Aw and, hence, leads to a longer shelf-life. The lower Aw permits the crispy pieces to be kept crispy for longer. As will be appreciated, the chocolate or chocolate-like layer of the present disclosure may be penetrated in places by the crispy pieces, especially where the pieces are larger. Accordingly, the further steps taken, as discussed above to reduce the Aw, help the crispy pieces stay crispy for longer, despite some direct contact with the centre.

The centre also contains minced fruit pieces. These help to ensure that the core is visually and texturally exciting for the consumer.

In an advantageous embodiment of the process according to the present disclosure, the product obtained in step 2) is enrobed immediately with crispy pieces in a continuous rotating pan. Preferably, in order to avoid "double or multiple products", the centre covered with liquid chocolate or chocolate-like composition fall directly from the enrober net on a crispy pieces bed inside a continuous rotating pan. This crispy pieces bed is moving so that next incoming balls will not fall on balls already on the crispy pieces bed. Then the product obtained after step 3) is sieved to separate and recycle the free crispy pieces into the continuous rotating pan. Then the cooling step 4) is carried out in a conventional cooling tunnel. Finally the product obtained after step 4) is packed air tight rapidly, in order the crispy pieces do not pick up moisture from air.

In a preferred embodiment, the final product contains less than 8% by weight of Safa based on the total weight of the food product.

In another embodiment (not preferred) for the whole product in which the crispy pieces are not directly visible, a further step 4a) placed before or preferably after step 4) is carried out which consists in a second chocolate or chocolate-like composition coating. The coating is either very thin (to see the crispy pieces relief), or thick (to hide the crispy pieces). In the preferred case [after step 4)], a second cooling step 4b) is needed before the packaging step 5).

There is also described herein a bite-size food product comprising: a) a plastic solid soft centre, b) a layer of a chocolate-like composition which totally coat the centre, c) a layer of individual crispy pieces, advantageously mainly cereal pieces, which fully covers the chocolate-like composition layer, the bite-size product having a fat content of between 4 and 24% by weight based on the total weight of the food product, advantageously between 5 and 18% by weight, the soft centre having an Aw of between 0.28 and 0.6, advantageously of between 0.3 and 0.5, a fat content of less than 14% by weight based on the total weight of the centre, advantageously less than 10% by weight, the consistency of a modeling clay and represents 40-76% by weight of the food product, advantageously 50 - 70%.

This bite-size food product (not within the scope of the invention) preferably has the centre is fruit-based or fudge-based, advantageously fruit-based. Preferably the centre is cold formed at a temperature of less than 60°C, preferably less than 50°C, more preferably 0-50°C. Preferably the centre is fruit-based and contains more than 5% by weight of fruit dry solids based on the total weight of the fruit-based centre, preferably more than 15% by weight of fruit dry solids. Preferably the centre has a 3D solid of revolution form, advantageously a ball form. The centre preferably contains 4-28% by weight of humectants, preferably 4 to 20%, based on the total weight of the centre, in particular glycerol.

Preferably the centre contains some crispy pieces, in particular cereal inclusions. Preferably at least 30% of the pieces of the crispy layer c) have a size superior to 1.6 mm, advantageously superior to 2 mm. Preferably the crispy pieces layer c) represents 10 to 30% w of the total weight content of the food product. Preferably the crispy pieces of the crispy pieces layer c) are visible and clean.

Preferably the centre is fruit-based and the fruit is orchard fruit, advantageously chosen in the group consisting of cranberry, raisin, apricot, apple, tomato, red bell pepper, pumpkin, strawberry, raspberry, blueberry, blackberry, blackcurrant, fig, peach, pear, plum, dates, banana, mango, citrus, pineapple, cherries and mixture thereof. Preferably the centre contains non-gelatinized starch.

Preferably the chocolate-like composition layer b) represents 14-45% by weight of the total weight content of the food product.

Additionally, there is described herein a process of preparation of a bite-size food product as discussed herein, wherein it comprises the following steps:
1) preparation of the centre by mixing and optionally mincing the ingredients and cold forming the centre at a temperature below 60°C,
2) enrobing the centre obtained in step 1) with a melted chocolate-like composition in order to form the layer b),
3) applying a coat of crispy pieces on the product obtained in step 2) before the complete setting of the chocolate-like composition layer in order to form the layer c)
4) cooling the food product obtained in step 3) to set the chocolate-like composition layer b)

Preferably there is no bulk storage of the formed centre obtained in step 1) before carrying out step 2). Preferably the loose crispy pieces obtained after step 3) are separated from the bite-size food product after or before the cooling step 4), advantageously before the cooling step 4). Preferably the mincing of the ingredient in step 1) is carried out with a meat grinder. Preferably the mincing with a meat grinder of step 1) is carried out before and/or after the mixing, advantageously before and after the mixing. Preferably in order to carry out step 3) the centre coated by the melted chocolate-like composition obtained after step 2) fall directly from the enrober wire mesh on a crispy pieces bed, the pieces being in movement to enable a full coating.

### Figures

The present disclosure will be described in relation to the following non-limiting figures, in which:

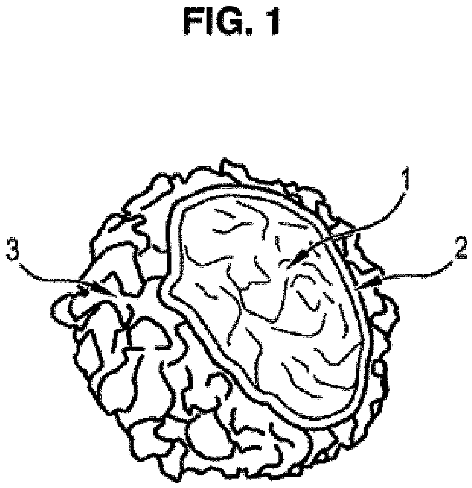

Figure 1 provides a drawing of the final product having a ball shape cut in half in order to show the fruit centre (1), the chocolate-like layer (2) and the layer of individual crispy pieces (3).

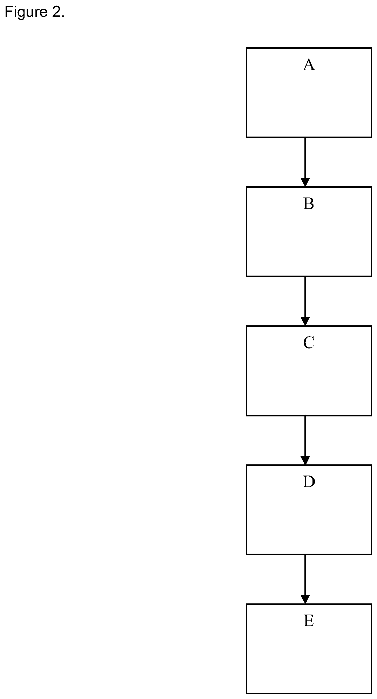

Figure 2 represents a schematic diagram of the process according to the present disclosure. In this process the first step (A) is the preparation of the centre. In step (B) the centre is enrobed with melted chocolate. In step (C) the enrobed centre is coated with crispy pieces. In step (D) the food product is cooled so that the chocolate sets. This produces the final food product (E).

### Examples

The present disclosure will now be described in relation to the following non-limiting examples.

### Examples 1-4:

### Compositions of a fruit-based centre of a bite-size product

The following table 2 indicates the amounts and ingredients of a fruit-based center in % by weight based on the total weight of the fruit-based centre

**Table 2a**

| **Ingredients** | **Example 1** | **Example 2** |
|---|---|---|
| Minced Dried fruits pieces | Apricot sun dried (contains 14% water and sulphites) : **55** | Semi-dried cranberry pieces infused with sugars, glycerol, polydextrose and maltodextrins (1): **100** |
| Humectants | Glycerol : **16** | |
| Other liquids | **0** | |
| Sugars dry matter | **0** | |
| Fruit powders | apple powder (contains 5% water and sulphites): **5** | |
| bulking agents (powders) | Polydextrose : **24** | |
| Acids, flavor, colors, seasoning, salt | **0** | |
| Fat | **0** | |
| Aw | **0.37** | **0.53-0.54** |
| Fruit dry solid | **52** | **25** |

| | | |
|---|---|---|
| (1) Cranberries: reference 94669 from Ocean Spray. | | |

**Table 2b**

| **Ingredients** | **Example 3** | **Example 4** |
|---|---|---|
| Minced Dried fruits pieces | Dried Raisin: **25** | Dried Raisin golden : **10** |
| | Cranberries infused with sucrose and glycerin : **35** | |
| Humectants | Glycerol: **4** | Glycerol: **15** |
| Other liquids | Blackcurrant concentrated juice : **1.6** | Water: **8.51** |
| Sugars dry matter | **0** | glucose syrup: **10.04** dry matter |
| Fruit powders | **0** | Tomato powder: **30** |
| bulking agents (powders) | Non gelatinized wheat starch : **22** | Non gelatinized wheat starch : **14** |
| | Polydextrose : **12** | |
| Acids, flavor, colors, seasoning, salt | Raspberry Aroma : **0.4** | Salt : **1.5** |
| | | Seasoning : **2.45** |
| | | Basil aroma: **0.4** |
| Fat | **0** | Olive oil: **7.5** |
| | | Lecithin : **0.6** |
| Aw | **0.51** | **0.50** |
| Fruit dry solid | **30** | **36** |

### Example 5:

### Chocolate-like composition having the same color as the crispy cereals for use in the coating of the bite size product

The following table 3 indicates the amounts and ingredients of a chocolate-like composition in % by weight based on the total weight of the chocolate-like composition

| **Ingredients** | **%** |
|---|---|
| Nestlé Fitness® breakfast cereals "rich in whole wheat", milled as fine as possible with a cutter (+ sieving to eliminate any remaining pieces > 3.15 mm) | 48.5 |
| Cocoa butter | 35.64 |
| Skimmed milk powder (fine spray dried, i.e. not agglomerated) | 15.4 |
| Lecithin | 0.46 |
| Total | 100 |

This coating comprise 36.9% w/w fat, 42.2% w/w of cereals (including 26.9% w/w of wholegrain cereals), 29.8% w/w of starch and only 16.6% w/w sugars.

If this chocolate-like composition is used as the layer b) and broken crispy pieces of "Nestlé Fitness® breakfast cereals" are used as the layer c), the consumer will only see 2 layers in the finished product: a centre and a cereal layer. It enables to hide the chocolate-like composition, as well as increase the cereal content and decrease sugar content of the whole product.

Process to make this chocolate-like composition: just mix the ingredients, without further grinding than the one indicated above. The coarse granulometry will be hidden on eating by the cereal layer.

### Example 6:

### White chocolate-like composition (chocolate analog) for use in the coating

### Example 6a

The following table 4 indicates the amounts and ingredients of a chocolate-like composition in % by weight based on the total weight of the chocolate-like composition

| **Ingredients** | **%** |
|---|---|
| Sugar | 24 |
| Cocoa butter | 31.3 |
| native wheat starch (non gelatinized) | 18.3 |
| Skimmed milk powder | 20 |
| Tri-calcium citrate tetrahydrate | 5.8 |
| Lecithin | 0.35 |
| Vanillin | 0.05 |
| citric acid | 0.2 |
| Total | 100 |

This recipe is not a chocolate but a chocolate analog because it contains starch to reduce sugar. However, it is preferable to keep cocoa butter to have a hard fat (necessary to avoid loose cereal pieces), with a clean melting and without too many saturated fats. Analysis: fat 31.8% w/w, sugars 34.7 w/w (added sugars 24% w/w), starch 16.1% w/w, Protein 7% w/w, calcium 1.5% w/w.

Use the same process to make this chocolate-like composition than a classical white chocolate process.

### Example 6b

In order to have a naturally fruity chocolate, it is possible to replace 5% of wheat starch of the example 6a by freeze dried raspberry powder: the color is pink. In this case no citric acid is added and it is not necessary to add aroma in the fruit-based centre.

### Example 7:

### Preparation of a bite-size food product having a ball form

The bite size food product consists of:
- a Fruit-based centre which represents 60% by weight of the bite-size food product: diameter 18.3 mm, weight: 4.2 g

Example 1 (Apricot) or 2 (Cranberry) can be used as the recipe for the fruit-based centre.
- a layer b) of a white chocolate-like composition according to example 6a or 6b which represents 20% by weight of the bite-size food product (weight: 1.4 g). The thickness of the layer b) before coating with cereals is ∼1 mm.
- a layer of crispy pieces of cereals which represents 20% by weight of the bite-size food product (weight: 1.4 g).

The commercially available Nestlé Fitness® "miel et amandes" wholegrain cereals has been used, having an Aw 0.25 and a blond color. Their nutritional composition per 100g is : 382 Kcal, 7.5 protein, 78.8 carbohydrates (including 28.3 sugars), 4.2 lipids, 4.4 fibers, 0.4 sodium. The cereal flakes are broken with a roller, then sieved to keep only the pieces passing though a 3.15mm sieve and retained on a 1.6 mm sieve (square sieves).

The bite-size food product obtained has a weight of 7 g and a diameter of 25 +/-3 mm (not 100% round).

The bite-size food product obtained by using Example 2 + example 6a + the cereals has the following composition: a fat content of 7.5% w/w, a sugar content of 32% w/w, a protein content of 3% w/w, a starch content of 13%, a glycerol content of 9.6% and a fibre content of 12% w/w.

The process of preparation is as follow:
All raw material are at 22°C.

For a fruit based center according to Example 1, the fruit based centre is prepared by:
- milling apple cubes having 5% water content w/w with a meat cutter, for a time long enough to get a fine apple powder. Depending on the cutter efficiency, if necessary, the bigger uncrushed pieces may be removed by a square sieve of 3.15 mm side.
- coarse mince the semi-dried apricot with a Kitchen Aid 5KSM150PS equipped with the "FGA" meat grinder (knife + sieve having 6.2 mm round holes);
- Mixing the apple powder, the grinded apricot, polydextrose and glycerol with a Kitchen Aid 5KSM150PS planetary mixer until a dough is formed

Then the fruit-based dough obtained with the recipe according to Example 1, or the semi-dried cranberry pieces according to Example 2 are minced, textured and extruded in a single pass, producing a continuous cylinder of 18mm of diameter, using a meat grinder Kitchen Aid 5KSM150PS equipped with the "FGA" meat grinder (knife + sieve of 6.2 mm) and in addition, the sausage extruder. The fruit dough temperature is 24 to 28°C after extrusion.

The cylinder is then cut in pieces having a size just below the length of the boilies table. The cylinder is then converted into balls with a boilies table "TABLE DES FRERES MAHIN" GM-18 mm, from Starbaits brand (http://www.starbaits.com/fr/article/table-des-freres-mahin.50.html).

We now have a fruit based centre shaped in balls of 18mm diameter.

The balls fall directly from the balling table on the entry wire net of a chocolate enrober **"Minicoater"** from Sollich KG (D-32102 Bad Salzuflen), which temper the melted chocolate-like composition according to Example 6a at 29°C, then coat the balls with the tempered mass.

Then the balls covered by the chocolate-like composition are enrobed with cereals in a coating drum similar to the ST36 from Casa Herrera, Inc.(casaherrera.com): the cereals having a size of between 1.6 and 3.15 mm, and a temperature of about 20°C are first feed at the drum entrance, to form a cereal bed of a few centimeter thick; the balls covered by the chocolate-like composition then fall directly on this bed, and do not touch the walls; they pick up some cereals on all their surface while they are moving. The residence time in the drum is 8 to 12 seconds, then both the balls coated with cereals and the free cereals fall on the exit (lower) side of the drum, directly on a grid in slope: the free cereals pass through the grid and are recycled back to the coating drum, and the final products are transferred on the grid to come on the belt of a cooling tunnel. Once the chocolate-like composition is set by cooling (8 minutes at 11°C), we obtain the bite-size food product according to the present disclosure before packaging air tight.

The final product, tasted at 23°C, has a soft centre and a crispy outside. This texture contrast is kept until 6 months of storage at room temperature (18-20°C).

### Examples 8 and 9 (not within the scope of the invention):

### Compositions of Fudge-based centres of a bite-size product

### Example 8:

To make the plastic solid soft centre, we use pure Fudge from the centre of the Cadbury finished product called "Cadbury Fudge®", sold in UK by Cadbury. As indicated on the label, ingredients of this Fudge are: sugar, glucose syrup, sweetened condensed skimmed milk, vegetable oil, flavourings, sodium bicarbonate, emulsifier (E471), and salt. It contains 10.7% fat and its Aw is 0.6.

This Fudge, stored in blocs of 5 kg at about 25°C, is cut in pieces of about 1 cm with a knife, then minced with the same meat grinder like for the Apricot in example 7. The temperature of the minced Fudge at the exit is about 29°C. Then, it is further textured and extruded using a meat grinder Kitchen Aid 5KSM150PS equipped with the "FGA" meat grinder (knife + sieve of 6.2 mm) and in addition, the sausage extruder. This produces a continuous cylinder of 18mm of diameter, having a temperature of about 30°C after extrusion.

Further processing (balling, coating with the chocolate-like composition then with cereals) is the same than in example 7.

The final product, tasted at 24°C, has a soft centre and a crispy outside. This texture contrast is kept at least until 2 months of storage at room temperature.

### Example 9:

To make the plastic solid soft centre, we use a mix of:
- 80% pure Fudge from Cadbury Roses, UK (Aw = 0.57 and fat = 15%)
- 15% Non gelatinized native wheat starch
- 5% glycerol

To mix these 3 ingredients, the fudge is heated at 55 to 60°C with a microwave, the glycerol is added by mixing both ingredients in a Hobart planetary mixer with a double jacket at 55 to 60°C, until the mass is homogeneous. Then the starch is immediately added (keeping the same temperature) and mixed until homogeneity. Aw of the mix (after cooling at 25°C) is 0.41 and fat content is 12%.

After cooling at 30 to 40°C, the mass is then extruded into a cylinder like in example 7. Further processing (balling, coating with the chocolate-like composition then with cereals) is the same than in example 7. Due to a small resting time, the balling was done at about 25°C.

The foregoing detailed description has been provided by way of explanation and illustration, and is not intended to limit the scope of the appended claims.

## Claims

1. A bite-size food product comprising
a) a plastic solid soft centre,
b) a layer of a chocolate or chocolate-like composition coating the centre,
c) a layer of individual crispy pieces fully covering the chocolate or chocolate-like composition layer,
the food product having a fat content of between 4 and 24% by weight based on the total weight of the food product,
said centre having an Aw of between 0.28 and 0.6, a fat content of less than 14% by weight based on the total weight of the centre, and forming 40-76% by weight of the food product,
wherein said centre is cold formed at a temperature of 20 ±10°C,
wherein said centre is fruit-based and contains minced fruit pieces in an amount of up to 100% by weight based on the total weight of the fruit-based centre.

2. The food product according to claim 1, wherein the centre is formed in the shape of a 3D solid of revolution, and/or wherein the centre is substantially ball shaped.

3. The food product according to claim 1 or claim 2, wherein the centre contains 4-28% by weight of humectants, preferably wherein the humectant comprises glycerol.

4. The food product according to any of the preceding claims, wherein the centre contains crispy pieces.

5. The food product according to any of the preceding claims, wherein at least 30% of the pieces of the crispy layer c) have a size greater than 1.6 mm.

6. The food product according to claim 5, wherein at least 30% of the pieces of the crispy layer c) have a size greater than 2 mm, and/or wherein the centre is fruit-based and the fruit is orchard fruit, preferably selected from the group consisting of cranberry, raisin, apricot, apple, tomato, red bell pepper, pumpkin, strawberry, raspberry, blueberry, blackberry, blackcurrant, fig, peach, pear, plum, dates, banana, mango, citrus, pineapple, cherries and mixtures thereof.

7. The food product according to any of the preceding claims, wherein the chocolate or chocolate-like composition layer b) represents 14-45% by weight of the total weight of the food product.

8. The food product according to any of the preceding claims, wherein the centre contains non-gelatinized starch.

9. The food product according to any of the preceding claims, wherein the crispy pieces layer c) represents 10 to 30% w of the total weight content of the food product, and/or wherein the crispy pieces of the crispy pieces layer c) are visible and clean.

10. A process of preparation of a bite-size food product according to any of claims 1-9, the process comprising:
1) preparing the centre by mixing and mincing the ingredients, and cold forming the centre, wherein the cold forming of the centre is at a temperature of 20±10°C,
2) enrobing the centre obtained in step 1) with a melted chocolate or chocolate-like composition in order to form the layer b),
3) applying a coating of crispy pieces on the product obtained in step 2) before the complete setting of the chocolate or chocolate-like composition layer, and
4) cooling the food product obtained in step 3) to set the chocolate or chocolate-like composition layer b).

11. The process according to claim 10 wherein there is no bulk storage of the formed centre obtained in step 1) before carrying out step 2), and/or wherein the loose crispy pieces obtained after step 3) are separated from the bite-size food product after or before the cooling step 4), preferably before the cooling step 4).

12. The process according to claim 10 or claim 11, wherein the mincing of the ingredient in step 1) is carried out with a meat grinder, and/or wherein the mincing with a meat grinder of step 1) is carried out before and/or after the mixing, preferably before and after the mixing.

13. The process according to any of claims 10-12, wherein in step 3) is conducted by direct transfer of the centre coated by the melted chocolate or chocolate-like composition after step 2) from an enrober wire mesh on to a bed of crispy pieces, the pieces being in movement to enable a full coating.

## Patentansprüche

1. Mundgerechtes Lebensmittelprodukt, das Folgendes umfasst:
a) ein plastisches weiches Feststoffzentrum,
b) eine Schicht Schokolade oder schokoladenähnliche Zusammensetzung, die das Zentrum bedeckt,
c) eine Schicht einzelner knuspriger Stücke, die die Schokolade oder schokoladenähnliche Zusammensetzung vollständig bedecken,
wobei das Lebensmittelprodukt einen Fettgehalt von 4 bis 24 Gew.-% basierend auf dem Gesamtgewicht des Lebensmittelprodukts aufweist,
wobei das Zentrum einen Aw von 0,28 bis 0,6 und einen Fettgehalt von weniger als 14 Gew.-% basierend auf dem Gesamtgewicht des Zentrums aufweist und 40-76 Gew.-% des Lebensmittelprodukts ausmacht,
wobei das Zentrum bei einer Temperatur von 20 ± 10 °C kaltgeformt ist,
wobei das Zentrum fruchtbasiert ist und fein gehackte Fruchtstücke in einer Menge von bis zu 100 Gew.-% basierend auf dem Gesamtgewicht des fruchtbasierten Zentrums aufweist.

2. Lebensmittelprodukt nach Anspruch 1, wobei das Zentrum in Form eines 3D-Rotationskörper geformt ist und/oder wobei das Zentrum im Wesentlichen kugelförmig ist.

3. Lebensmittelprodukt nach Anspruch 1 oder Anspruch 2, wobei das Zentrum 4-28 Gew.-% Feuchthaltemittel umfasst, wobei vorzugsweise das Feuchthaltemittel Glycerin umfasst.

4. Lebensmittelprodukt nach einem der vorstehenden Ansprüche, wobei das Zentrum knusprige Stücke umfasst.

5. Lebensmittelprodukt nach einem der vorstehenden Ansprüche, wobei mindestens 30 % der Stücke in der knusprigen Schicht c) eine Größe von mehr als 1,6 mm aufweist.

6. Lebensmittelprodukt nach Anspruch 5, wobei mindestens 30 % der Stücke in der knusprigen Schicht c) eine Größe von mehr als 2 mm aufweisen und/oder wobei das Zentrum fruchtbasiert ist und die Frucht eine Obstsorte ist,
vorzugsweise ausgewählt aus der Gruppe bestehend aus Cranberry, Rosine, Aprikose, Apfel, Tomate, roter Paprika, Kürbis, Erdbeere, Himbeere, Heidelbeere, Brombeere, Johannisbeere, Feige, Pfirsich, Birne, Pflaume, Datteln, Bananen, Mango, Zitrusfrüchten, Ananas, Kirschen und Mischungen davon.

7. Lebensmittelprodukt nach einem der vorstehenden Ansprüche, wobei die Schicht Schokolade oder schokoladenähnlicher Zusammensetzung b) 14-45 Gew.-% des Gesamtgewichts des Lebensmittelprodukts darstellt.

8. Lebensmittelprodukt nach einem der vorstehenden Ansprüche, wobei das Zentrum nichtgelatinierte Stärke enthält.

9. Lebensmittelprodukt nach einem der vorstehenden Ansprüche, wobei die Schicht knuspriger Stücke c) 10 bis 30 Gew.-% des Gesamtgewichtsgehalts des Lebensmittelprodukts darstellt und/oder wobei die knusprigen Stücke der Schicht knuspriger Stücke c) sichtbar und sauber sind.

10. Verfahren zur Herstellung eines mundgerechten Lebensmittelprodukts nach einem der Ansprüche 1-9, wobei das Verfahren Folgendes umfasst:
1) Herstellen des Zentrums durch Mischen und Feinhacken der Zutaten und durch Kaltformen des Zentrums, wobei das Kaltformen des Zentrums bei einer Temperatur von 20 ± 10 °C erfolgt,
2) Schokolieren des in Schritt 1) erzielten Zentrums mit einer geschmolzenen Schokolade oder schokoladenähnlichen Zusammensetzung, um die Schicht b) zu bilden,
3) Auftragen eines Überzugs knuspriger Stücke auf das in Schritt 2) erzielte Produkt vor dem vollständigen Festwerden der Schicht Schokolade oder schokoladenähnlichen Zusammensetzung, und
4) Abkühlen des in Schritt 3) erzielten Lebensmittelprodukts zum Festwerden der Schicht Schokolade oder schokoladenähnlicher Zusammensetzung b)

11. Verfahren nach Anspruch 10, wobei kein Massengutspeichern des in Schritt 1) erzielten gebildeten Zentrums vor dem Ausführen von Schritt 2) erfolgt und/oder wobei die losen knusprigen Stücke, die nach Schritt 3) erhalten werden, von dem mundgerechten Lebensmittelprodukt nach oder vor dem Abkühlschritt 4) getrennt werden, vorzugsweise vor dem Abkühlschritt 4).

12. Verfahren nach Anspruch 10 oder Anspruch 11, wobei das Feinhacken der Zutaten in Schritt 1) mit einem Fleischwolf erfolgt und/oder wobei das Feinhacken mit einem Fleischwolf von Schritt 1) vor und/oder nach dem Mischen erfolgt, vorzugsweise vor und nach dem Mischen.

13. Verfahren nach einem der Ansprüche 10-12, wobei in Schritt 3) eine direkte Übertragung des Zentrums, das durch die geschmolzenen Schokolade oder schokoladenähnlichen Zusammensetzung nach Schritt 2) überzogen wurde, von einem Glasur-Gitterrost auf ein Bett knuspriger Stücke erfolgt, wobei die Stücke in Bewegung sind, um einen vollständigen Überzug zu ermöglichen.

## Revendications

1. Produit alimentaire de la taille d'une bouchée comprenant
a) une partie centrale molle solide plastique,
b) une couche d'une composition de chocolat ou de type chocolat enrobant la partie centrale,
c) une couche de morceaux croustillants individuels couvrant complètement la couche de composition de chocolat ou de type chocolat,
le produit alimentaire ayant une teneur en matières grasses comprise entre 4 et 24 % en poids sur la base du poids total du produit alimentaire,
ladite partie centrale ayant une valeur Aw comprise entre 0,28 et 0,6, une teneur en matières grasses inférieure à 14 % en poids sur la base du poids total de la partie centrale, et formant 40 à 76 % en poids du produit alimentaire,
dans lequel ladite partie centrale est formée à froid à une température de 20 ± 10 °C,
dans lequel ladite partie centrale est à base de fruits et contient des morceaux de fruits hachés en une quantité allant jusqu'à 100 % en poids sur la base du poids total de la partie centrale à base de fruits.

2. Produit alimentaire selon la revendication 1, dans lequel la partie centrale est formée sous la forme d'un solide de révolution tridimensionnel, et/ou dans lequel la partie centrale est essentiellement sphérique.

3. Produit alimentaire selon la revendication 1 ou la revendication 2, dans lequel la partie centrale contient 4 à 28 % en poids d'humectants, de préférence dans lequel l'humectant comprend du glycérol.

4. Produit alimentaire selon l'une quelconque des revendications précédentes, dans lequel la partie centrale contient des morceaux croustillants.

5. Produit alimentaire selon l'une quelconque des revendications précédentes, dans lequel au moins 30 % des morceaux de la couche croustillante c) ont une taille supérieure à 1,6 mm.

6. Produit alimentaire selon la revendication 5, dans lequel au moins 30 % des morceaux de la couche croustillante c) ont une taille supérieure à 2 mm, et/ou dans lequel la partie centrale est à base de fruits et le fruit est un fruit de verger, choisi de préférence dans le groupe constitué de canneberge, raisin, abricot, pomme, tomate, poivron rouge, potiron, fraise, framboise, myrtille, mûre, cassis, figue, pêche, poire, prune, dates, banane, mangue, agrume, ananas, cerises et des mélanges de ceux-ci.

7. Produit alimentaire selon l'une quelconque des revendications précédentes, dans lequel la couche de composition de chocolat ou de type chocolat b) représente 14 à 45 % en poids du poids total du produit alimentaire.

8. Produit alimentaire selon l'une quelconque des revendications précédentes, dans lequel la partie centrale contient de l'amidon non gélatiné.

9. Produit alimentaire selon l'une quelconque des revendications précédentes, dans lequel la couche de morceaux croustillants c) représente 10 à 30 % en poids de la teneur totale en poids du produit alimentaire, et/ou dans lequel les morceaux croustillants de la couche de morceaux croustillants c) sont visibles et nets.

10. Processus de préparation d'un produit alimentaire de la taille d'une bouchée selon l'une quelconque des revendications 1 à 9, le processus comprenant :
1) la préparation de la partie centrale en mélangeant et en hachant les ingrédients, et en formant à froid la partie centrale, dans lequel le formage à froid de la partie centrale est à une température de 20 ± 10 °C,
2) l'enrobage de la partie centrale obtenue à l'étape 1) avec une composition fondue de chocolat ou de type chocolat afin de former la couche b),
3) l'application d'un enrobage de morceaux croustillants sur le produit obtenu à l'étape 2) avant le durcissement complet de la couche de composition de chocolat ou de type chocolat, et
4) le refroidissement du produit alimentaire obtenu à l'étape 3) pour durcir la couche de composition de chocolat ou de type chocolat b)

11. Processus selon la revendication 10, dans lequel il n'y a aucun stockage en vrac de la partie centrale formée obtenue à l'étape 1) avant la réalisation de l'étape 2), et/ou dans lequel les morceaux croustillants libres obtenus après l'étape 3) sont séparés du produit alimentaire de la taille d'une bouchée après ou avant l'étape de refroidissement 4), de préférence avant l'étape de refroidissement 4).

12. Processus selon la revendication 10 ou la revendication 11, dans lequel le hachage de l'ingrédient à l'étape 1) est effectué avec un broyeur à viande, et/ou dans lequel le hachage avec un broyeur à viande de l'étape 1) est effectué avant et/ou après le mélange, de préférence avant et après le mélange.

13. Processus selon l'une quelconque des revendications 10 à 12, dans lequel l'étape 3) est réalisée par transfert direct de la partie centrale enrobée par la composition fondue de chocolat ou de type chocolat après l'étape 2) à partir d'un treillis métallique d'enrobeuse sur un lit de morceaux croustillants, les morceaux étant en mouvement pour permettre un enrobage complet.
